# EUROPÄISCHE PATENTANMELDUNG

(11) **EP 4 751 795 A2**
(43) Veröffentlichungstag der Anmeldung: **03.06.2026**
(21) Anmeldenummer: 26160799.8
(22) Anmeldetag: 27.10.2022
(51) Int. Cl.: B01D 46/52

(54) **FILTEREINHEIT ZUM EINBAU IN EINE STAUBSAUGVORRICHTUNG SOWIE STAUBSAUGVORRICHTUNG MIT FILTEREINHEIT**

(30) Priorität: 03.11.2021 DE 102021005561
(62) Teilanmeldung aus: 22204214.5
(71) Anmelder: Producteers International GmbH, 73614 Schorndorf (DE)
(72) Erfinder: Krogsgaard, Holger, 8600 Silkeborg (DK)
(74) Vertreter: Patentanwälte Jackisch-Kohl und Kohl

(57) **Zusammenfassung**

Die Filtereinheit hat eine Filterkassette (6), wenigstens ein Filterelement (5) und wenigstens ein erstes Dichtelement (37). Außerdem hat die Filtereinheit eine Kassettenaufnahme (7), in die die Filterkassette (6) eingesetzt wird. Die Kassettenaufnahme (7) ist mit einer Luftdurchtrittsöffnung (16) versehen, die gegenüber einer Luftdurchtrittsöffnung der Filterkassette (6) mit wenigstens einem zweiten Dichtelement (26) abgedichtet ist. Die beiden Dichtelemente (26, 37) liegen unter einem spitzen Winkel entgegengesetzt schräg zu einer Längsmittelebene der Filtereinheit bzw. der Filterkassette (6).

Die Filterkassette (6) kann in eine Aufnahmeeinheit eingesetzt werden, die einen die Filterkassette (6) aufnehmenden Halteteil (41) aufweist, der vorteilhaft ein Rahmen ist, der die Filterkassette (6) umgibt.

## Beschreibung

Die Erfindung betrifft eine Filtereinheit zum Einbau in eine Staubsaugvorrichtung nach dem Oberbegriff des Anspruches 1 bzw. 11 sowie eine Staubsaugvorrichtung mit einer solchen Filtereinheit nach Anspruch 16.

Die Filtereinheit weist eine Filterkassette auf, in der ein Filterelement untergebracht ist, mit dem Schmutzpartikel aus einem Luftstrom zurückgehalten werden. Der von der Staubsaugvorrichtung erzeugte, mit Schmutzpartikeln versehene Luftstrom durchströmt die Filtereinheit, wobei die Schmutzpartikel vom Filterelement zurückgehalten werden. Die gereinigte Luft tritt aus der Filterkassette bzw. dem Filterelement aus und strömt über Auslassöffnungen der Staubsaugvorrichtung wieder nach außen.

Da das Filterelement mit der Zeit durch die zurückgehaltenen Schmutzpartikel zugesetzt ist, muss die Filterkassette zum Auswechseln und/oder Reinigen des Filterelementes von Zeit zu Zeit aus der Kassettenaufnahme herausgenommen werden. Die Dichtelemente, mit denen die Filtereinheit gegen den Innenraum der Staubsaugvorrichtung abgedichtet werden, können beim Einsetzen bzw. Herausnehmen der Filterkassette aus der Kassettenaufnahme Probleme bereiten. Insbesondere muss beim Einsetzen darauf geachtet werden, dass die Dichtelemente ihre genaue Einbaulage einnehmen, um einen Austritt der verschmutzten Luft in die Staubsaugvorrichtung zu verhindern.

Der Erfindung liegt die Aufgabe zugrunde, die gattungsgemäße Filtereinheit und die Staubsaugvorrichtung so auszubilden, dass ein problemloser Ein- und Ausbau der Filtereinheit ohne Beeinträchtigung der Funktionsfähigkeit der Filtereinheit gewährleistet ist.

Diese Aufgabe wird bei der gattungsgemäßen Filtereinheit erfindungsgemäß mit den kennzeichnenden Merkmalen des Anspruches 1 bzw. 11 und bei der Staubsaugvorrichtung mit den Merkmalen des Anspruches 16 gelöst.

Bei der erfindungsgemäßen Filtereinheit nach Anspruch 1 sind die beiden Dichtelemente entgegengesetzt schräg zu einer Längsmittelebene der Filtereinheit bzw. der Filterkassette unter einem spitzen Winkel angeordnet. Dadurch kann die Filterkassette mit dem Filterelement einfach in die Kassettenaufnahme eingesetzt werden, wobei durch die entgegengesetzt geneigten Dichtelemente gewährleistet ist, dass diese ihre genaue Lage innerhalb der Staubsaugvorrichtung einnehmen. Daher besteht nicht die Gefahr, dass verschmutzte Luft aus der Filtereinheit in das Innere der Staubsaugvorrichtung gelangt. Die Schräglage der beiden Dichtelemente in Bezug auf die Längsmittelebene erlaubt einen einfachen Wechsel der Filtereinheit.

Die Längsmittelebene der Filtereinheit liegt bevorzugt zumindest etwa horizontal, wenn diese in die Staubsaugvorrichtung eingebaut ist.

Die beiden Dichtelemente sind bei einer besonders vorteilhaften Ausführungsform unter einem gleichen Winkel entgegengesetzt schräg zur Längsmittelebene angeordnet. Dies ermöglicht eine besonders einfache Ausbildung der Filterkassette.

Vorteilhaft ist das zweite Dichtelement an der Kassettenaufnahme vorgesehen. Somit sind die beiden Dichtelemente an verschiedenen Bauteilen der Filtereinheit vorgesehen. Dadurch wird nicht nur der Wechselvorgang der Filterkassette erleichtert, sondern auch die Herstellung der Filtereinheit vereinfacht und erleichtert.

Das zweite Dichtelement ist vorteilhaft ein Dichtring, der in eine die Luftdurchtrittsöffnung umgebende Ringnut im Boden der Kassettenaufnahme eingesetzt ist. Dies hat den Vorteil, dass dieses zweite Dichtelement aufgrund seiner stationären Anordnung in der Kassettenaufnahme genau positioniert ist, so dass beim Einsetzen der Filterkassette in die Kassettenaufnahme eine zuverlässige Zuordnung des zweiten Dichtelementes zur Filterkassette sichergestellt ist.

Das Filterelement kann ein von der Filterkassette getrenntes Bauteil sein, das in die Filterkassette eingesetzt wird. Das Filterelement kann aber auch Bestandteil der Filterkassette sein bzw. mit ihm eine Baueinheit bilden.

Bei einer bevorzugten Ausführungsform ist das erste Dichtelement des Filterelementes am oberen Rand eines Rahmens angeordnet. Er nimmt den eigentlichen Filterkörper auf, durch den die verschmutzte Luft strömt und der die Schmutzpartikel zurückhält.

Die Filterkassette ist in vorteilhafter Weise am oberen Rand mit einer Aufnahme versehen, die das erste Dichtelement des Filterelementes aufnimmt. Wird das Filterelement in die Filterkassette eingesetzt, gelangt das erste Dichtelement des Filterelementes zwangläufig in die Aufnahme der Filterkassette.

Eine besonders wirkungsvolle Abdichtung und Positionierung des ersten Dichtelementes ergibt sich, wenn die Aufnahme durch einen im Querschnitt L-förmig ausgebildeten Rand der Filterkassette gebildet ist. Der L-förmige Rand umgibt das erste Dichtelement und stützt es von außen ab. Außerdem kann das erste Dichtelement einwandfrei auf dem L-förmigen Rand der Filterkassette aufliegen.

Die Aufnahme der Filterkassette umgibt eine Luftaustrittsöffnung, durch die der Luftstrom nach dem Durchgang durch das Filterelement aus der Filtereinheit austritt.

Das erste Dichtelement des Filterelementes ist bevorzugt ein Dichtring, der ein kostengünstiges und einfach zu montierendes Bauteil ist.

In der Einbaulage ist das Dichtelement des Filterelementes vorteilhaft zumindest teilweise elastisch verformt, was zu einer einwandfreien Abdichtung beiträgt.

Auch das zweite Dichtelement der Kassettenaufnahme kann in vorteilhafter Weise elastisch verformbar sein. Wird die Filterkassette in die Kassettenaufnahme eingesetzt, dann wird dieses zweite Dichtelement durch die Filterkassette elastisch verformt, so dass eine einwandfreie Abdichtung gewährleistet ist.

Um das erste Dichtelement des Filterelementes in konstruktiv einfacher Weise elastisch zu verformen, ist bei einer vorteilhaften Ausführungsform die Kassettenaufnahme mit mindestens einem Druckteil, vorzugsweise einem Ringsteg, versehen. Er drückt das erste Dichtelement des Filterelementes gegen die Aufnahme der Filterkassette.

Zu einer optimalen Positionierung der Filterkassette in der Kassettenaufnahme trägt bei, wenn die Filterkassette in Einsetzrichtung gegen einen Anschlag in der Kassettenaufnahme belastet ist. Dadurch wird eine exakte Positionierung der Filterkassette in der Kassettenaufnahme gewährleistet.

Bei einer bevorzugten Ausführungsform weist die Filterkassette an ihrer in Einsetzrichtung hinteren Seitenwand wenigstens einen Anschlagteil auf, der vorteilhaft als Griff ausgebildet ist. Dieser Anschlagteil wirkt mit einem die Kassettenaufnahme umschließenden Deckel zusammen. Über den Deckel und den Anschlagteil wird die Filterkassette gegen den Anschlag in der Kassettenaufnahme gedrückt.

Das Einsetzen der Filterkassette in die Kassettenaufnahme wird erleichtert, wenn die Filterkassette mit einer das Filterelement umgebenden Seitenwand versehen ist, deren Höhe in Einsetzrichtung abnimmt. Dann wird die Filterkassette mit dem flacheren Teil in die Kassettenaufnahme eingesetzt.

Das Filterelement hängt bevorzugt mit seinem ersten Dichtelement schräg in der Filterkassette. Die Schräglage des Filterelementes führt dazu, dass, bezogen auf die Querschnittsfläche der Filterkassette, eine große Filterfläche zum Abfangen der Schmutzteilchen aus dem Luftstrom zur Verfügung steht.

Bei einer weiteren erfinderischen Ausbildung gemäß Anspruch 11 ist die Filterkassette in eine Aufnahmeeinheit einsetzbar, die einen die Filterkassette aufnehmenden Halteteil aufweist, der vorzugsweise ein Rahmen ist, der die Filterkassette umgibt. Die Filterkassette lässt sich im Halteteil zuverlässig positionieren, wobei die rahmenförmige Gestaltung dieses Halteteiles gewährleistet, dass die Filterkassette einwandfrei in ihrer Einbaulage gehalten wird
Bei einer vorteilhaften Ausführungsform ist das Filterelement in die Filterkassette einsetzbar, vorzugsweise in eine randseitige Aufnahme der Filterkassette eingehängt. Dadurch lässt sich das Filterelement einfach in die genaue Einbaulage bringen.

Die getrennte Ausbildung von Filterelement und Filterkassette hat den Vorteil, dass bei Bedarf lediglich eines der beiden Bauteile ausgewechselt werden muss.

Abweichend von einer solchen Gestaltung können das Filterelement und die Filterkassette auch eine einzige Baueinheit bilden, die in die Aufnahmeeinheit eingesetzt wird.

Eine einfache Ausbildung ergibt sich, wenn die Filterkassette auf einer Auflage aufliegt, die vorteilhaft an einem von einer Halteplatte abstehenden Rahmen der Aufnahmeeinheit vorgesehen ist. Eine solche Ausbildung erlaubt es, die Filterkassette durch einen einfachen Einschubvorgang in die genaue Einbaulage innerhalb der Aufnahmeeinheit zu bringen.

Der die Filterkassette aufnehmende Halteteil sowie der Rahmen zur Auflage der Filterkassette sind vorteilhaft auf verschiedenen Seiten der Halteplatte vorgesehen.

Um eine staubfreie Entnahme des Filterelementes zu ermöglichen, ist vorteilhaft eine Entnahmeeinheit vorgesehen.

Sie ist bevorzugt beutelförmig ausgebildet und wird zur Entnahme über das Filterelement bzw. über den Halteteil der Aufnahmeeinheit gestülpt. Die Entnahmeeinheit verhindert, dass am Filterelement befindliche Staubpartikel und dgl. beim Auswechselvorgang auf den Boden fallen. Vielmehr werden diese Teilchen von der beutelförmigen Entnahmeeinheit aufgefangen.

Die Halteplatte der Aufnahmeeinheit dient in bevorzugter Weise als Auflage für die Entnahmeeinheit, wenn diese beim Herausnehmen des Filterelementes auf der Aufnahmeeinheit über das Filterelement gesetzt wird.

Die erfindungsgemäße Staubsaugvorrichtung zeichnet sich dadurch aus, dass sie die erfindungsgemäße Filtereinheit aufweist.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

Die Erfindung wird anhand in den Zeichnungen dargestellter Ausführungsbeispiele näher erläutert. Es zeigen
- Fig. 1: in Seitenansicht und in schematischer Darstellung eine erfindungsgemäße Staubsaugvorrichtung mit einer erfindungsgemäßen Filtereinheit,
- Fig. 2: in perspektivischer Darstellung die erfindungsgemäße Filtereinheit in geschlossenem Zustand,
- Fig. 3: die geöffnete erfindungsgemäße Filtereinheit mit einer Kassettenaufnahme, in die eine Filterkassette mit einem eingesetzten Filterelement einschiebbar ist,
- Fig. 4: in perspektivischer Darstellung die Filtereinheit mit teilweise in die Kassettenaufnahme eingeschobener Filterkassette,
- Fig. 5: in perspektivischer Darstellung die vollständig in die Kassettenaufnahme eingeschobene Filterkassette,
- Fig. 6: einen Schnitt längs der Linie A-A in Fig. 1,
- Fig. 7 bis 10: verschiedene Positionen beim Herausziehen der Filterkassette aus der Kassettenaufnahme, wobei sich die Filterkassette zusammen mit dem eingesetzten Filterelement in einer als Beutel ausgebildeten Entnahmeeinheit befindet,
- Fig. 11: in Explosivdarstellung eine weitere Ausführungsform einer erfindungsgemäßen Filtereinheit,
- Fig. 12: in perspektivischer Darstellung die Filterkassette der Filtereinheit gemäß Fig. 11,
- Fig. 13: einen Längsschnitt durch die Filtereinheit gemäß Fig. 11,
- Fig. 14: in explosiver Darstellung die Filtereinheit gemäß Fig. 11 und eine Entnahmeeinheit,
- Fig. 15 bis 17: verschiedene Stufen beim Entfernen der Filterkassette mit Hilfe der Entnahmeeinheit.

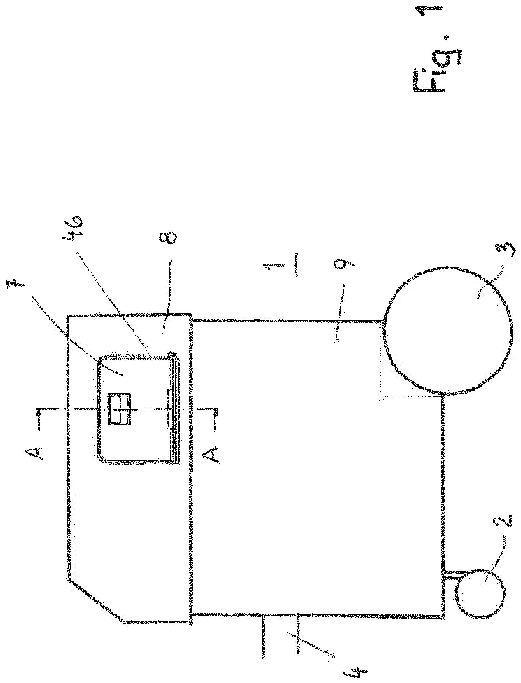

Fig. 1 zeigt in schematischer Darstellung eine Staubsaugvorrichtung 1, die mittels Rädern 2, 3 verfahrbar ist. Die Staubsaugvorrichtung 1 hat einen Sauganschluss 4, an den in bekannter Weise ein Saugschlauch angeschlossen werden kann. Mit ihm wird Staub und andere Schmutzpartikel von einem Untergrund gesaugt.

Der Saugstrom wird von einem (nicht dargestellten) Saugmotor erzeugt, der sich innerhalb der Staubsaugvorrichtung befinden kann. Der die Schmutzpartikel enthaltende Luftstrom wird einem Filterelement zugeführt, das die Schmutzpartikel zurückhält. Die gereinigte Luft selbst tritt über wenigstens eine (nicht dargestellte) Austrittsöffnung aus der Staubsaugvorrichtung 1 nach außen.

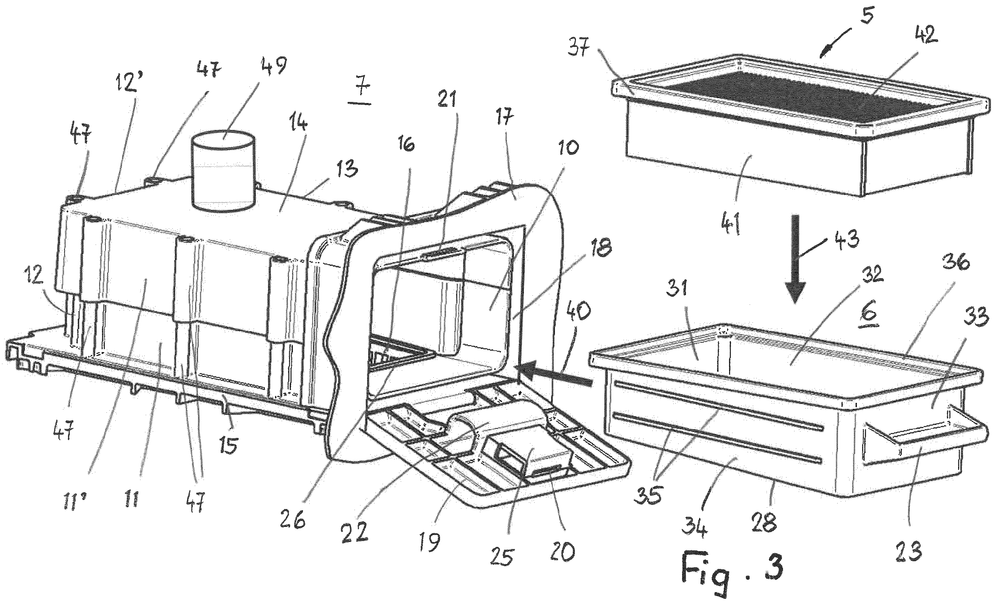

Das Filterelement 5 (Fig. 3) wird von einer Filterkassette 6 aufgenommen. Sie wird zusammen mit dem eingesetzten Filterelement 5 in eine Kassettenaufnahme 7 geschoben, die sich in einem Oberteil 8 eines Gehäuses 9 der Staubsaugvorrichtung 1 befindet (Fig. 1). Der Gehäuseoberteil 8 ist vorteilhaft lösbar am Gehäuse 9 vorgesehen, so dass er bei Bedarf einfach abgenommen werden kann, wenn beispielsweise Reparaturarbeiten am Saugmotor oder anderen Bestandteilen der Staubsaugvorrichtung notwendig sein sollten.

Die Kassettenaufnahme 7 ist vorteilhaft lösbar im Gehäuseoberteil 8 angeordnet, so dass sie, falls notwendig, einfach ausgewechselt werden kann. Die Kassettenaufnahme 7 hat einen Aufnahmeraum 10 (Fig. 3).

Der Aufnahmeraum 10 wird von Seitenwänden 11 bis 13, einer Deckenwand 14 und einem Boden 15 begrenzt. Die Seitenwände 11 bis 13, die Deckenwand 14 und der Boden 15 schließen jeweils rechtwinklig aneinander an.

Die Seitenwände 11, 13 sind länger als die Seitenwand 12.

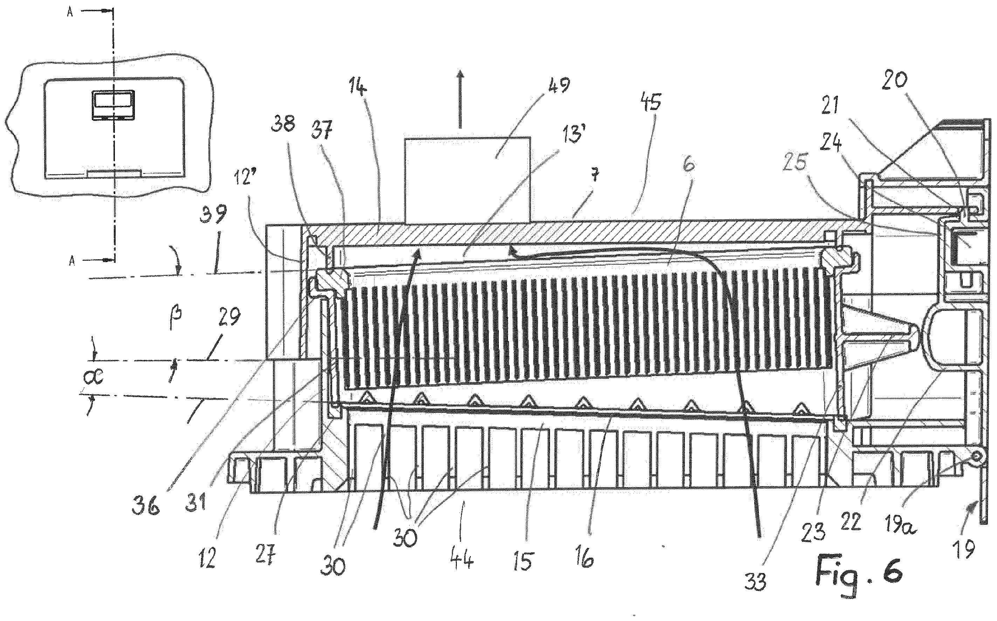

Die Seitenwände 11 bis 13 sind geschlossen. Der Boden 15 hat eine Durchtrittsöffnung 16 (Fig. 3), durch welche der die Schmutzpartikel enthaltende Luftstrom zum Filterelement 5 in der Filterkassette 6 gelangt. Sie weist in ihrem Boden ebenfalls eine (nicht dargestellte) Durchtrittsöffnung für den Luftstrom auf (Fig. 6).

In der Deckenwand 14 der Kassettenaufnahme 7 befindet sich ein Luftauslass 49, der vorteilhaft durch wenigstens einen vorstehenden Rohrstutzen gebildet wird. Er ist strömungstechnisch mit der Austrittsöffnung der Staubsaugvorrichtung verbunden.

Die der Seitenwand 12 gegenüberliegende und parallel zu ihr verlaufende Seitenwand 17 hat eine Einschuböffnung 18 für die Filterkassette 6. Die Einschuböffnung 18 kann mit einem Deckel 19 verschlossen werden. Er ist vorteilhaft an der Seitenwand 17 schwenkbar gelagert. Im Ausführungsbeispiel ist der Deckel 19 mit seinem in der Einbaulage unteren Rand am unteren Rand der Einschuböffnung 18 um eine horizontale Achse 19a schwenkbar gelagert (Fig. 6).

Grundsätzlich kann der Deckel 19 auch mit seinen anderen Rändern an der Kassettenaufnahme 7 schwenkbar gelagert sein.

Auch ist es möglich, den Deckel 19 beispielsweise über eine Schnapp- oder eine Rastverbindung mit der Kassettenaufnahme 7 zu verbinden. In diesem Fall wird der Deckel 19 von der Kassettenaufnahme 7 abgenommen, wenn die Einschuböffnung 18 geöffnet werden soll.

Die schwenkbare Lagerung des Deckels 19 hat den Vorteil, dass der Deckel nicht verloren gehen kann und stets zum Öffnen bzw. Schließen der Einschuböffnung 18 zur Verfügung steht.

Damit der Deckel 19 in seiner Schließstellung gesichert ist, ist er in vorteilhafter Weise mit einem Rastelement 20 versehen, das in Schließstellung in eine Rastaufnahme 21 am Rand der Einschuböffnung 18 eingreift (Fig. 3 und 6).

Der Deckel 19 kann abweichend vom dargestellten Ausführungsbeispiel in der Schließstellung beispielsweise auch durch Magnetkräfte gehalten sein.

An der Innenseite des Deckels 19 befindet sich wenigstens ein Anschlag 22, mit dem die Filterkassette 6 in eingeschobener Lage gesichert wird. Wie aus Fig. 6 hervorgeht, liegt der Anschlag 22 an einem Anschlagteil 23 der Filterkassette 6 an, so dass diese innerhalb der Kassettenaufnahme 7 nicht mehr verschoben werden kann.

Der Anschlag 22 und der Anschlagteil 23 sind so zueinander angeordnet, dass der Anschlag 22 die Filterkassette 6 gegen die der Einschuböffnung 18 gegenüberliegende Seitenwand 12 der Kassettenaufnahme 7 drückt (Fig. 6).

Der Anschlagteil 23 ist bevorzugt ein Griff, mit dessen Hilfe die Filterkassette 6 einfach eingeschoben und herausgezogen werden kann.

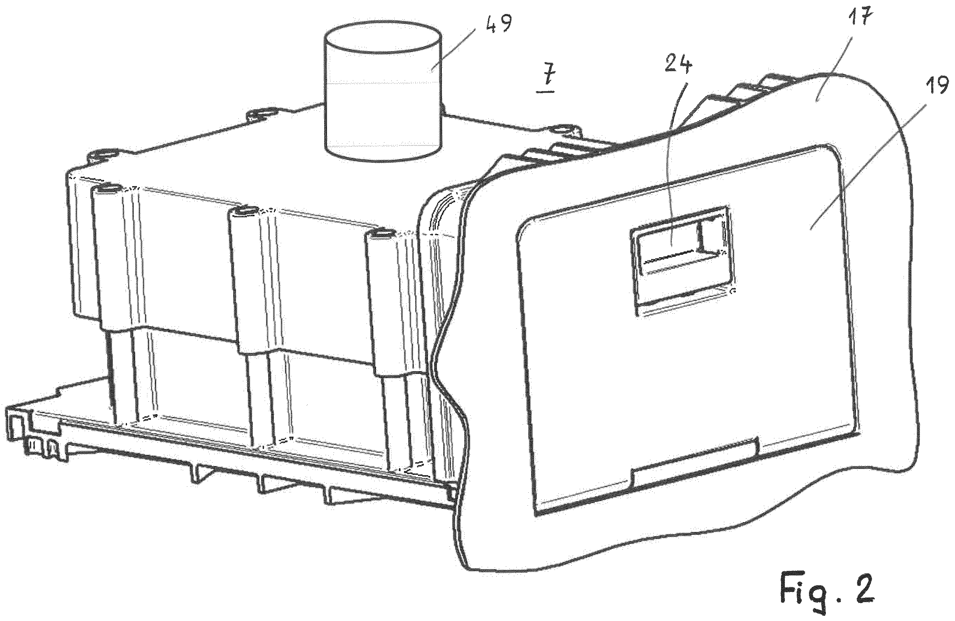

Damit der Deckel 19 einfach geöffnet werden kann, ist er mit einer Grifföffnung 24 versehen, die sich beispielhaft nahe dem in der Schließstellung oberen Rand des Deckels 19 befindet (Fig. 2). Die Grifföffnung 24 wird durch eine über die Innenseite des Deckels 19 vorstehende Abdeckung 25 geschlossen. Sie ist vorteilhaft einstückig mit dem Deckel 19 ausgebildet und haubenförmig gestaltet. Dadurch ergibt sich eine Griffmulde, in die der Benutzer der Staubsaugvorrichtung 1 hineingreifen kann, um den Deckel 19 zu verschwenken, wenn die Filterkassette 6 eingesetzt oder herausgenommen werden soll.

Auch der Anschlag 22 kann einstückig mit dem Deckel 19 ausgebildet sein. Wie insbesondere aus Fig. 6 hervorgeht, ist die Abdeckung 25 einstückig mit dem Anschlag 22 ausgebildet.

Am Rand der Durchtrittsöffnung 16 im Boden 15 der Kassettenaufnahme 7 ist ein umlaufender Dichtring 26 vorgesehen, der in eine Ringnut 27 eingesetzt ist (Fig. 6). Der Dichtring 26 ragt aus der Ringnut 27 vor und liegt bei eingeschobener Filterkassette 6 dichtend an deren Boden 28 an. Dadurch ist sichergestellt, dass die mit Schmutzpartikeln versehene Luft bei ihrem Durchtritt durch die Filterkassette 6 nicht nach außen tritt und in das Innere der Staubsaugvorrichtung 1 gelangt.

Der Boden 15 der Kassettenaufnahme 7 liegt unter einem spitzen Winkel α zur Längsmittelebene 29 der Kassettenaufnahme 7 bzw. der Filterkassette 6 (Fig. 6). Aufgrund dieser schrägen Lage des Bodens 15 hat die Seitenwand 12 geringere Höhe als die gegenüberliegende Seitenwand 17.

Wie aus Fig. 6 weiter hervorgeht, verläuft die Deckenwand 14 der Kassettenaufnahme 7 parallel zur Längsmittelebene 29.

Der Boden 15 der Kassettenaufnahme 7 ist durch Rippen 30 verstärkt, die an seiner Unterseite mit Abstand hintereinander liegen und parallel zueinander verlaufen. Ihre freien Enden liegen in einer parallel zur Längsmittelebene 29 verlaufenden Ebene. Dementsprechend nimmt die Höhe der Rippen 30 von der Seitenwand 12 aus entsprechend der Schräglage des Bodens 15 in Richtung auf die Seitenwand 17 ab. Die Rippen 30 sind vorteilhaft einstückig mit dem Boden 15 ausgebildet.

Da der Boden 15 der Kassettenaufnahme 7 winklig zu dessen Längsmittelebene 29 liegt, liegt auch der Dichtring 26 in einer Ebene, die den Winkel α mit der Längsmittelebene 29 einschließt.

Die Filterkassette 6 hat rechteckigen Umriss und weist die Seitenwände 31 bis 34 auf, die rechtwinklig zueinander liegen. Die Seitenwände 31 bis 34 sind geschlossen ausgebildet und durch den Boden 28 miteinander verbunden, der die Lufteintrittsöffnung aufweist. An der gegenüberliegenden Seite ist die Filterkassette 6 für den Austritt der Luft offen.

Der Griff 23 ist an der Außenseite der Seitenwand 33 vorgesehen und beispielhaft als U-förmiger Bügel ausgebildet, der senkrecht von der Seitenwand 33 absteht.

An der Außenseite der beiden einander gegenüberliegenden, die Längsseiten bildenden Seitenwände 32, 34 sind Versteifungsrippen 35 vorgesehen, die sich in Längsrichtung der Seitenwände 32, 34 erstrecken und vorteilhaft parallel zueinander verlaufen. Die Versteifungsrippen 35 haben Abstand vom oberen und unteren Rand der Seitenwände 32, 34 und vom Übergang der Seitenwände 32, 34 in die Seitenwände 31, 33.

Die Seitenwände 32, 34 können auch nur eine Versteifungsrippe oder mehr als zwei Versteifungsrippen aufweisen. Sind die Seitenwände 32, 34 ausreichend dick und stabil, können die Versteifungsrippen auch entfallen. Auch die schmalen Seitenwände 31, 33 können bei Bedarf mit wenigstens einer Versteifungsrippe versehen sein.

Der vom Boden 28 abgewandte Rand 36 ist im Längsschnitt L-förmig ausgebildet (Fig. 3 und 6). Der umlaufende Rand 36 ist nach außen abgewinkelt und dient als Auflage für einen Dichtring 37, der längs des oberen Randes des Filterelementes 5 vorgesehen ist. Ist das Filterelement 5 in die Filterkassette 6 eingesetzt, liegt der Dichtring 37 im umlaufenden Rand 36 der Filterkassette 6 (Fig. 6). Der Dichtring 37 ist vorteilhaft an die Querschnittsform des Randes 36 so angepasst, dass er dichtend an der Innenwand des umlaufenden Randes 36 anliegt. Dadurch wird verhindert, dass der durch das Filterelement 5 strömende Luftstrom zwischen dem Filterelement 5 und der Filterkassette 6 in das Innere der Staubsaugvorrichtung 1 gelangt.

Damit eine einwandfreie Abdichtung durch den Dichtring 37 gewährleistet ist, ist es von Vorteil, wenn er bei eingeschobener Filterkassette 6 in Richtung auf den Rand 36 der Filterkassette 6 belastet ist. Dies wird im Ausführungsbeispiel dadurch erreicht, dass von der Innenseite der Deckenwand 14 der Kassettenaufnahme 7 ein umlaufender Steg 38 absteht, der über den Umfang des Dichtringes 37 verläuft und diesen nach unten gegen den Rand 36 der Filterkassette 6 belastet. Durch den Steg 38 wird der Dichtring 37 elastisch so verformt, dass er mit seiner Unterseite und mit seiner Mantelfläche gegen den L-förmigen Rand 36 gedrückt wird.

Wie Fig. 6 zeigt, liegt der Rand 26 und dementsprechend auch der Dichtring 37 in einer Ebene 39, die unter einem spitzen Winkel β zur Längsmittelebene 29 der Kassettenaufnahme 7 liegt.

Die Ebene 39 sowie der Boden 15 der Filterkassette 6 sind entgegengesetzt schräg zueinander angeordnet. Vorteilhaft sind die Neigungswinkel α und β gleich groß, die beispielsweise etwa 2° betragen. Durch diese Gestaltung verjüngt sich die Höhe der Filterkassette 6 in Einschubrichtung 40 (Fig. 3) der Filterkassette 6 in die Kassettenaufnahme 7.

Aufgrund der beschriebenen Gestaltung nimmt die Höhe der parallel zur Einschubrichtung 40 verlaufenden Seitenwände 32, 34 der Filterkassette 6 in Einschubrichtung 40 stetig ab, so dass die Seitenwand 31 kleinere Höhe hat als die gegenüberliegende, mit dem Griff 23 versehene Seitenwand 33.

Sofern die Seitenwände 32, 34 der Filterkassette 6 mit den Versteifungsrippen 35 versehen sind, verlaufen diese vorteilhaft in Einschubrichtung 40.

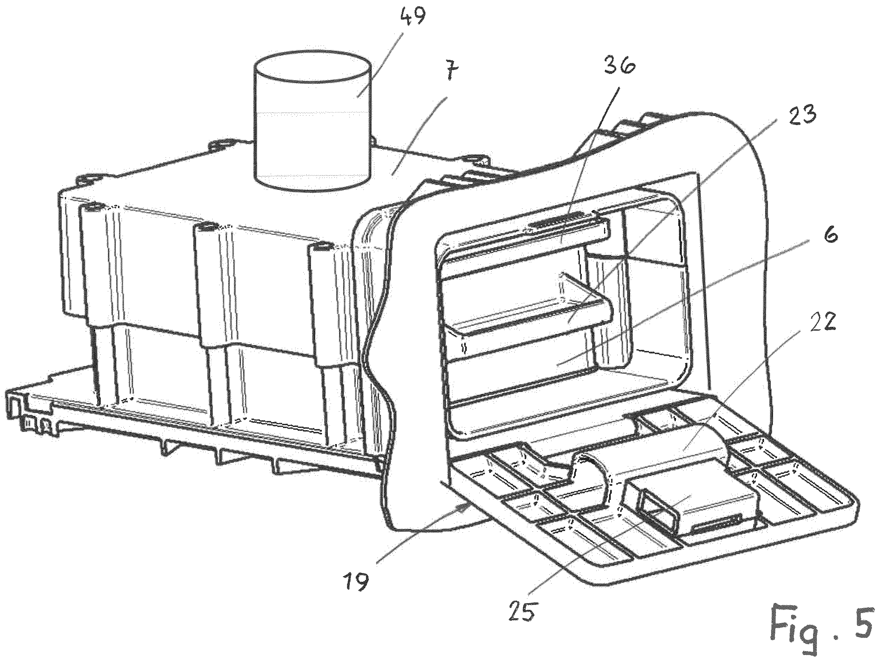

Das Filterelement 5 hat einen rechteckigen Rahmen 41 (Fig. 5), der einen Filterkörper 42 umgibt. Er ist in geeigneter Weise am Rahmen 41 gehalten.

Der Rahmen 41 ist an seinem in Fig. 3 oberen Rand mit dem umlaufenden Dichtring 37 versehen.

Der Rahmen 41 weist über seinen Umfang gleiche Höhe auf. Wird das Filterelement 5 in Richtung 43 in die Filterkassette 6 eingesetzt, liegt das Filterelement 5 schräg innerhalb der Filterkassette 6 (Fig. 6), wobei der Dichtring 37 auf dem nach außen vorstehenden Rand 36 der Filterkassette 6 aufliegt.

Der Filterkörper 42 füllt den vom Rahmen 41 umschlossenen Innenraum aus, so dass die Saugluft nicht am Filterkörper 42 vorbei durch das Filterelement 5 strömen kann. Die in der Saugluft enthaltenen Verunreinigungen werden dadurch zuverlässig vom Filterkörper 42 zurückgehalten. Zudem verhindert der Dichtring 37, dass zwischen dem Rand des Filterkörpers 42 bzw. dem Rahmen 41 und den Seitenwänden 31 bis 34 der Filterkassette 6 Luft hindurchströmen kann.

Da sich die Höhe der Filterkassette 6 in Einschubrichtung 40 verringert, lässt sie sich einfach in die Kassettenaufnahme 7 einschieben. Der Dichtring 37 des Filterelementes 5 kommt dadurch erst am Ende des Einschubvorganges in Kontakt mit dem umlaufenden Steg 38 der Kassettenaufnahme 7, wodurch der Einschubvorgang problemlos möglich ist. Insbesondere wird dadurch verhindert, dass beim Einschieben der Filterkassette 6 der Ringsteg 38 ständig in Kontakt mit dem Dichtring 37 ist, so dass die Gefahr besteht, dass der Dichtring 37 vom Rahmen 41 gelöst wird.

Eine weitere Möglichkeit besteht darin, die Kassettenaufnahme 67 zweiteilig auszubilden. Diese Möglichkeit zeigt insbesondere Fig. 6. In diesem Fall hat die Kassettenaufnahme 7 einen Unterteil 44, auf den ein Deckel 45 aufgesetzt wird. Er hat die Deckenwand 14 mit dem Ringsteg 38 sowie die Seitenwände 11' bis 13'. Diese Seitenwände übergreifen die Seitenwände 11 bis 13 des Unterteiles 44 mit Abstand. Die Zweiteilung der Kassettenaufnahme 7 ermöglicht einen einfachen Zusammenbau. Die beiden Teile 44, 45 müssen nicht fest miteinander verbunden sein, weil die Kassettenaufnahme 7 in einen Einbauraum 46 (Fig. 1) im Oberteil 8 der Staubsaugvorrichtung 1 eingebaut ist.

Im dargestellten Ausführungsbeispiel wird der Unterteil 44 und der Deckel 45 miteinander verschraubt. Hierzu sind sowohl am Unterteil 44 als auch am Deckel 45 an den Seitenwänden Verdickungen 47 vorgesehen, die Schrauben aufnehmen, über die die beiden Teile 44, 45 zusammengehalten werden. Die Verdickungen 47 des Unterteiles 44 sind mit Gewindeöffnungen versehen, in welche die Schrauben geschraubt werden.

Grundsätzlich ist es möglich, die Filterkassette 6 und das Filterelement 5 als eine Baueinheit auszubilden.

In Fig. 6 ist der Luftstrom eingezeichnet, der durch die Durchtrittsöffnung 16 im Boden 15 der Kassettenaufnahme 7 in die Filterkassette 6 strömt und das Filterelement 5 durchströmt

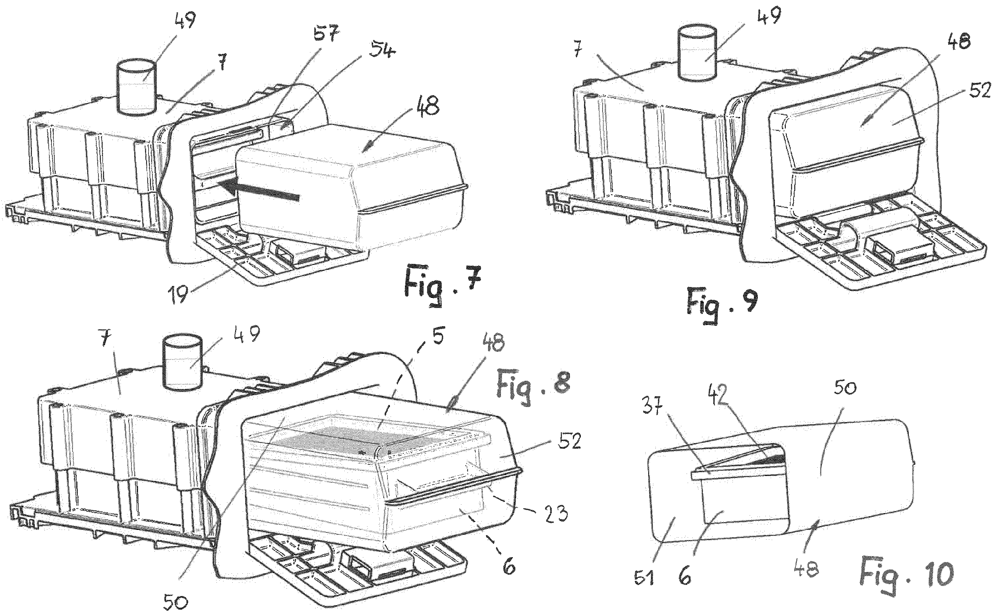

Die Fig. 7 bis 10 zeigen die Möglichkeit, die Filterkassette 6 mit eingesetztem Filterelement 5 mit Hilfe einer Entnahmeeinheit 48 der Kassettenaufnahme 7 zu entnehmen, ohne dass die am Filterelement 5 hängenden Verunreinigungen auf den Boden fallen. Dadurch ist eine staubfeie Entnahme möglich.

Die Entnahmeeinheit 48 ist beutelförmig ausgebildet und hat eine Seitenwand 50, die einen Aufnahmeraum 51 für die Filterkassette 6 und das Filterelement 5 umschließt. Der Aufnahmeraum 51 ist an einem Ende offen und am gegenüberliegenden Ende durch eine Abschlusswand 52 geschlossen.

Die Entnahmeeinheit 48 kann aus jedem geeigneten Material bestehen. Zumindest die Seitenwand 50 sollte so formstabil sein, dass die Entnahmeeinheit 48 nach Öffnen des Deckels 19 auf eine Aufnahmeeinheit 54 geschoben oder aufgesetzt werden kann, die die Filterkassette 6 mit eingesetztem Filterelement 5 umgibt (Fig. 7). Die Aufnahmeeinheit 54 ist in der Kassettenaufnahme 7 untergebracht und weist beispielsweise einen Rahmen 57 auf, auf dessen Mantel die Entnahmeeinheit 48 geschoben wird. Der Rahmen 57 ist so angeordnet, dass die Filterkassette 6 beim Einsetzen in die Aufnahmekassette 7 in den Rahmen 57 gelangt. Aufgrund der Formstabilität lässt sich die Entnahmeeinheit problemlos in die Kassettenaufnahme 7 schieben. Die Abschlusswand 52 ist so gestaltet, dass der Griff 23 der Filterkassette 6 ausreichend Platz in der Entnahmeeinheit 48 hat.

Die Abschlusswand 52 der Entnahmeeinheit 48 ist so ausgebildet, dass der Benutzer bei ausgeschobener Entnahmeeinheit 48 den Griff 23 erfassen und die Filterkassette 6 zusammen mit der Entnahmeeinheit 48 aus der Kassettenaufnahme 7 herausziehen kann (Fig. 8). Hierfür ist es zweckmäßig, wenn die Abschlusswand 52 flexibel ausgebildet ist, so dass der Benutzer den Griff 23 innerhalb der Entnahmeeinheit 48 zuverlässig fassen kann.

Da sich die Filterkassette 6 mit dem Filterelement 5 innerhalb der Entnahmeeinheit 48 befindet, ist eine staubfreie Entnahme der Filterkassette 6 mit dem Filterelement 5 zuverlässig möglich.

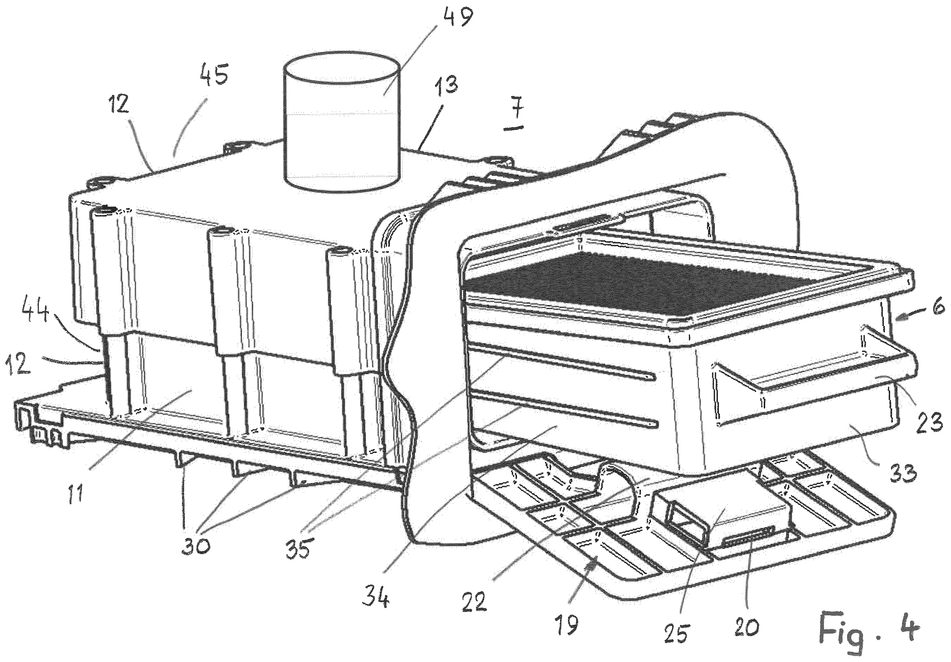

Die Filterkassette 6 mit dem eingesetzten Filterelement 5 kann eine Ausbildung entsprechend den Fig. 1 bis 6 haben. Eine solche Gestaltung der Filterkassette 6 und des Filterelementes 5 ist allerdings nicht zwingend. Die Entnahmeeinheit 48 kann auch bei anders gestalteten Filterkassetten eingesetzt werden.

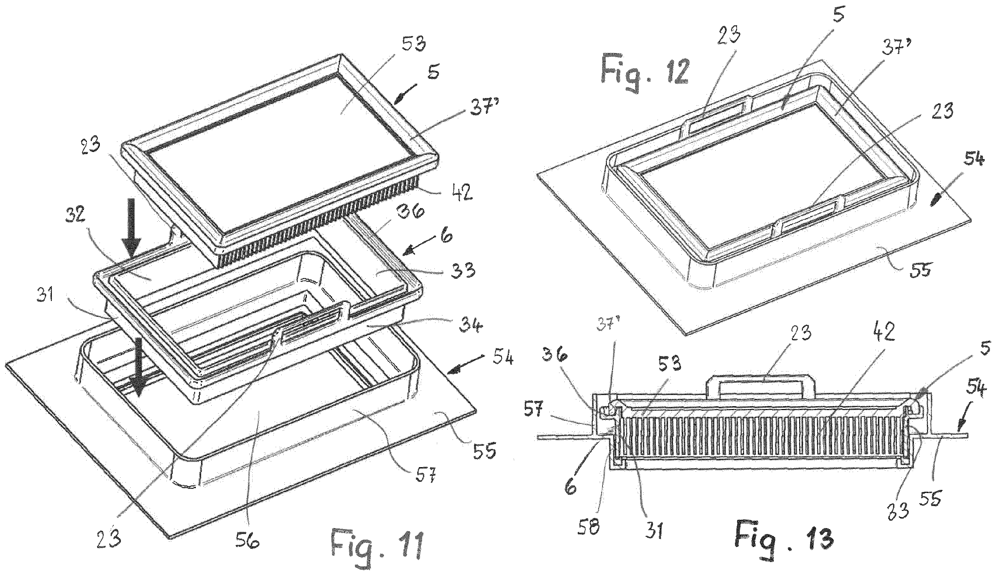

Die Fig. 11 bis 13 zeigen eine beispielhafte weitere Gestaltung der Filterkassette mit dem Filterelement. Die Filterkassette 6 hat die Seitenwände 31 bis 34, die entsprechend der Ausführungsform gemäß den Fig. 1 bis 6 einen rechteckigen Rahmen bilden, der das Filterelement 5 aufnimmt. Der in Fig. 11 obere Rand 36 der Filterkassette 6 ist im Querschnitt profiliert ausgebildet und dient zur Aufnahme eines oberen Randes 37' des Filterelementes 5.

Wie Fig. 13 zeigt, ist der obere Rand 36 im Querschnitt u-förmig ausgebildet und steht über die Seitenwände 31 bis 34 vor.

Das Filterelement 5 hat den Filterkörper 42, der an der Unterseite einer Abdeckwand 53 vorgesehen ist. Sie hat rechteckigen Umriss und wird vom Rand 37' umgeben, der vorteilhaft einstückig mit der Abdeckwand 53 ausgebildet ist. Der Rand 37' ist als Profilteil ausgebildet, der in das U-Profil des Randes 36 der Filterkassette 6 eingreift (Fig. 13).

Die Abdeckwand 53 des Filterelementes 5 liegt in der Einbaulage an der Innenseite der Seitenwände der Filterkassette 6 an. In der eingehängten Lage ragt der Filterkörper 42 des Filterelementes 5 nicht über die Seitenwände 31 bis 34 der Filterkassette 6 vor, so dass der Filterkörper 42 zuverlässig geschützt ist.

An den beiden Längsseitenwänden 32, 34 der Filterkassette 6 ist jeweils ein nach oben abstehender Griff 23 vorgesehen, der vorteilhaft einstückig mit den Seitenwänden 32, 34 ausgebildet ist. Die beiden Griffe 23 befinden sich in halber Länge der Seitenwände 32, 34.

Die Griffe 23 sind so angeordnet, dass sie nicht in das Querschnittsprofil des über die Seitenwände 31 bis 34 vorstehenden umlaufenden Randes 36 ragen, so dass das Filterelement 5 mit seinem umlaufenden Rand 37' in den Rand 36 der Filterkassette 6 eingehängt werden kann.

Die Filterkassette 6 wird in die Aufnahmeeinheit 54 eingesetzt. Sie hat eine Halteplatte 55, die vorteilhaft rechteckigen Umriss hat und mit einer zentralen Öffnung 56 versehen ist. Sie hat ebenfalls vorteilhaft rechteckigen Umriss. Mit Abstand wird der Rand der Öffnung 56 vom Rahmen 57 umgeben, der ebenfalls rechteckigen Umriss hat und vorteilhaft einstückig mit der Halteplatte 55 ausgebildet ist.

Wie aus Fig. 13 hervorgeht, wird der Rand der Öffnung 56 von einem Rahmen 58 umgeben, der auf der dem Rahmen 57 gegenüberliegenden Seite der Halteplatte 57 vorgesehen ist. Beide Rahmen 57, 58 liegen parallel zueinander und sind jeweils in vorteilhafter Weise einstückig mit der Halteplatte 55 ausgebildet.

Der freie Rand des Rahmens 58 ist im Querschnitt L-förmig ausgebildet. Die Filterkassette 6 liegt mit dem unteren Rand ihrer Seitenwände 31 bis 34 auf dem L-förmigen Rand des Rahmens 58 (Fig. 13).

Damit die Filterkassette 6 innerhalb der Aufnahmeeinheit 54 lagegesichert ist, liegen die Seitenwände 31 bis 34 der Filterkassette 6 vorteilhaft an der Innenseite des Rahmens 58 an.

Da der Rahmen 57 gegenüber dem Rand der Öffnung 56 versetzt ist, besteht ein ausreichender Raum für den Rand 36 der Filterkassette 6 zur Verfügung. Der Rand 36 liegt mit Abstand von der Halteplatte 55 sowie von dem umgebenden Rahmen 57.

In der eingehängten Lage liegt die Abdeckwand 53 des Filterelementes 5 innerhalb des von den Seitenwänden 31 bis 34 der Filterkassette 6 umschlossenen Raumes. Der umlaufende Rand 37' des Filterelementes 5 steht über die Abdeckwand 53 vor.

Wie den Fig. 12 und 13 entnommen werden kann, wird die Filterkassette 6 zusammen mit dem Filterelement 5 vom Rahmen 57 der Aufnahmeeinheit 54 überragt, so dass diese Teile durch den Rahmen 57 geschützt sind.

Die Griffe 23 stehen über den Rahmen 57 vor, so dass die Filterkassette 6 einfach aus dem Rahmen 57 herausgenommen bzw. einfach in ihn eingesetzt werden kann.

Die Aufnahmeeinheit 54 mit der Halteplatte 55 erleichtert die Handhabung der Entnahmeeinheit 48.

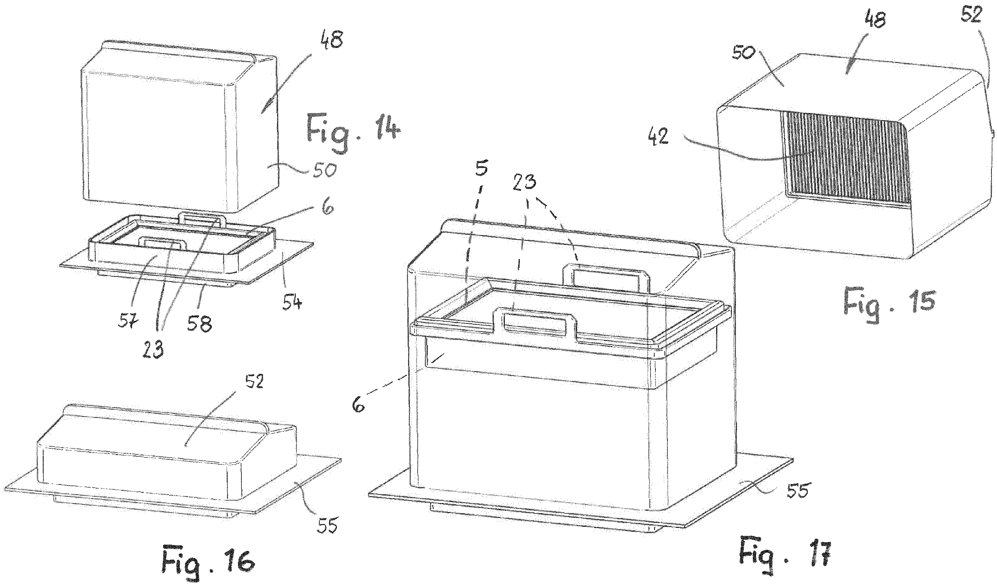

In den Fig. 14 bis 17 ist der Ablauf beim Herausnehmen der Filterkassette 6 mittels der Entnahmeeinheit 48 dargestellt. Fig. 14 zeigt die Situation, in der die Filterkassette 6 zusammen mit dem Filterelement 5 sich noch in der Aufnahmeeinheit 54 befindet. Um die Filterkassette 6 mit der Filtereinheit 5 staubfrei zu entnehmen, wird die Entnahmeeinheit 48 auf die Aufnahmeeinheit 54 so aufgesetzt, dass die Seitenwand 50 der Entnahmeeinheit 48 den Rahmen 57 der Aufnahmeeinheit 54 umgibt. Auf dem über den Rahmen 57 überstehenden Teil der Halteplatte 54 kann die Entnahmeeinheit 48 einfach aufgesetzt werden. Die Seitenwand 50 der Entnahmeeinheit 48 ist derart elastisch oder auch plastisch verformbar, dass sie so weit zusammengedrückt werden kann, dass die Abschlusswand 52 bis in Höhe der beiden Griffe 23 der Filterkassette 6 gelangt (Fig. 16). In dieser Lage kann der Benutzer die beiden Griffe 23 durch die Seitenwand 50 der Entnahmeeinheit 48 greifen und die Filterkassette 6 mit dem darin befindlichen Filterelement 5 aus der Aufnahmeeinheit 54 herausheben. Hierbei wird die Entnahmeeinheit 48 bzw. ihre Seitenwand 50 wieder in Richtung auf ihre Ausgangslage gestreckt (Fig. 17).

Sobald die Filterkassette 6 aus der Aufnahmeeinheit 34 herausgehoben worden ist, kann die Entnahmeeinheit 48 von der Aufnahmeeinheit 54 entfernt werden. Hierbei kann die Entnahmeeinheit 48 so gedreht werden, dass ihre Abschlusswand 52 nach unten zeigt, so dass die am Filterelement 5 befindlichen Verschmutzungen nicht auf den Boden fallen können, sondern von der Entnahmeeinheit 48 aufgenommen werden.

Da die Entnahmeeinheit 48 bei der dargestellten Ausführungsform zunächst zusammengedrückt und anschließend wieder auseinandergezogen werden kann, befindet sich die Filterkassette 6 mit ausreichendem Abstand von der offenen Stirnseite der Entnahmeeinheit 48, wodurch das Risiko weiter verringert ist, dass vom Filterkörper 42 Schmutzteilchen nach außen gelangen.

In einer einfachen und kostengünstigen Ausgestaltung ist die Entnahmeeinheit 48 ein Kunststoffbeutel.

Es ist ohne weiteres möglich, die Entnahmeeinheit 48 auch so auszubilden, dass sie nur eine solche Höhe hat, dass die Griffe 23 der Filterkassette 6 bereits dann vom Benutzer erfasst werden können, wenn die Entnahmeeinheit 48 auf die Aufnahmeeinheit 54 aufgesetzt ist. Dann muss der Benutzer beim Herausziehen der Filterkassette 6 aus der Aufnahmeeinheit 54 lediglich darauf achten, dass beim Umdrehen der Aufnahmeeinheit 54 nicht Schmutzteilchen nach außen gelangen.

Die Saugvorrichtung ist mit einer entsprechenden Aufnahme für die Aufnahmeeinheit 54 versehen.

Die Aufnahmeeinheit 54 kann auch so ausgebildet sein, dass sie zusammenfaltbar oder auch teleskopartig gestaltet ist, so dass die Aufnahmeeinheit 54 gezielt zusammengeschoben werden kann, wenn die Filterkassette 6 in der beschriebenen Weise entnommen werden soll.

## Patentansprüche

1. Filtereinheit zum Einbau in eine Staubsaugvorrichtung (1), mit einer Filterkassette (6), wenigstens einem Filterelement (5) und wenigstens einem ersten Dichtelement (37) sowie mit einer Kassettenaufnahme (7), in die die Filterkassette (6) einsetzbar und die mit einer Luftdurchtrittsöffnung (16) versehen ist, die gegenüber einer Luftdurchtrittsöffnung der Filterkassette (6) mit wenigstens einem zweiten Dichtelement (26) abgedichtet ist,
**dadurch gekennzeichnet, dass** die beiden Dichtelemente (26, 37) unter einem spitzen Winkel (α, β) entgegengesetzt schräg zu einer Längsmittelebene (29) der Filtereinheit (5 bis 7) bzw. der Filterkassette (6) liegen.

2. Filtereinheit nach Anspruch 1,
**dadurch gekennzeichnet, dass** die Längsmittelebene (29) der Filtereinheit (5 bis 7) bzw. der Filterkassette (6) etwa horizontal liegt.

3. Filtereinheit nach Anspruch 1 oder 2,
**dadurch gekennzeichnet, dass** die beiden Dichtelemente (26, 37) unter gleichem Winkel (α, β) entgegengesetzt schräg zur Längsmittelebene (29) angeordnet sind.

4. Filtereinheit nach einem der Ansprüche 1 bis 3,
**dadurch gekennzeichnet, dass** das zweite Dichtelement (26) ein Dichtring ist, der in eine die Luftdurchtrittsöffnung (16) umgebende Ringnut (27) im Boden (15) der Kassettenaufnahme (7) eingesetzt ist.

5. Filtereinheit nach einem der Ansprüche 1 bis 4,
**dadurch gekennzeichnet, dass** das Filterelement (5) mit dem ersten Dichtelement (37) versehen ist, das vorzugsweise auf einem oberen Rand (36) der Filterkassette (6) aufliegt, der vorteilhaft eine Aufnahme (36) für das erste Dichtelement (37) des Filterelementes (5) aufweist, die vorteilhaft durch einen im Querschnitt L-förmig ausgebildeten Rand der Filterkassette (6) gebildet ist und vorzugsweise eine Luftaustrittsöffnung umgibt.

6. Filtereinheit nach einem der Ansprüche 1 bis 5,
**dadurch gekennzeichnet, dass** das erste Dichtelement (37) des Filterelementes (5) am oberen Rand eines Rahmens (41) angeordnet ist und vorteilhaft ein elastisch verformbarer Dichtring ist.

7. Filtereinheit nach einem der Ansprüche 1 bis 6,
**dadurch gekennzeichnet, dass** die Kassettenaufnahme (7) wenigstens einen Druckteil (38), vorzugsweise einen Ringsteg, aufweist, der das erste Dichtelement (37) gegen die Aufnahme (36) der Filterkassette (6) drückt, die vorteilhaft in Einsetzrichtung (40) gegen einen Anschlag in der Kassettenaufnahme (7) belastet ist.

8. Filtereinheit nach einem der Ansprüche 1 bis 7,
**dadurch gekennzeichnet, dass** die Filterkassette (6) an ihrer in Einsetzrichtung (40) hinteren Seitenwand (33) wenigstens einen Anschlagteil (23), vorzugsweise einen Griff, aufweist, der mit einem die Kassettenaufnahme (7) schließenden Deckel (19) zusammenwirkt.

9. Filtereinheit nach einem der Ansprüche 1 bis 8,
**dadurch gekennzeichnet, dass** die Filterkassette (6) eine das Filterelement (5) umgebende Seitenwand (31 bis 34) aufweist, deren Höhe in Einsetzrichtung (40) abnimmt.

10. Filtereinheit nach einem der Ansprüche 1 bis 9,
**dadurch gekennzeichnet, dass** das Filterelement (5) mit dem ersten Dichtelement (37) schräg in der Filterkassette (6) hängt.

11. Filtereinheit zum Einbau in eine Staubsaugvorrichtung, mit einer Filterkassette (6), einem Filterelement (5) und wenigstens einem ersten Dichtelement (35, 37'),
**dadurch gekennzeichnet, dass** die Filterkassette (6) in eine Aufnahmeeinheit (54) einsetzbar ist, die einen die Filterkassette (6) aufnehmenden Halteteil (57) aufweist, der vorteilhaft ein Rahmen ist, der die Filterkassette (6) umgibt.

12. Filtereinheit nach Anspruch 11,
**dadurch gekennzeichnet, dass** das Filterelement (5) in die Filterkassette (6) einsetzbar ist, vorzugsweise in eine randseitige Aufnahme (36) der Filterkassette (6) eingehängt ist, die vorzugsweise auf einer Auflage (58) aufliegt, die vorteilhaft an einem von einer Halteplatte (55) abstehenden Rahmen (58) der Aufnahmeeinheit (54) vorgesehen ist.

13. Filtereinheit nach Anspruch 11 oder 12,
**dadurch gekennzeichnet, dass** der Halteteil (57) und der Rahmen (58) auf verschiedenen Seiten der Halteplatte (55) vorgesehen sind.

14. Filtereinheit nach einem der Ansprüche 11 bis 13,
**dadurch gekennzeichnet, dass** zur Entnahme des Filterelementes (5) eine Entnahmeeinheit (48) vorgesehen ist, die vorteilhaft beutelförmig ausgebildet ist und zur Entnahme des Filterelementes (5) über das Filterelement (5) bzw. über den Halteteil (57) der Aufnahmeeinheit (54) gestülpt wird.

15. Filtereinheit nach einem der Ansprüche 11 bis 14,
**dadurch gekennzeichnet, dass** die Halteplatte (55) der Aufnahmeeinheit (54) als Auflage für die Entnahmeeinheit (48) beim Herausnehmen des Filterelementes (5) aus der Aufnahmeeinheit (54) dient.

16. Staubsaugvorrichtung mit einer Filtereinheit nach einem der Ansprüche 1 bis 15.
